# EUROPÄISCHE PATENTANMELDUNG

(11) **EP 0 924 874 A2**
(43) Veröffentlichungstag der Anmeldung: **23.06.1999**
(21) Anmeldenummer: 98440280.0
(22) Anmeldetag: 04.12.1998
(51) Int. Cl.: H04B 3/28

(54) **Verfahren und Anordnung zur Unterdrückung von Störsignalen in koaxialen kabeln**

(30) Priorität: 16.12.1997 DE 19755774
(71) Anmelder: ALCATEL, 75008 Paris (FR)
(72) Erfinder: Heidemann, Rolf, Dr., 71732 Tamm (DE); Krimmel, Heinz, 70825 Korntal-Münchingen (DE)
(74) Vertreter: Rausch, Gabriele, Dr.

(57) **Zusammenfassung**

Es wird ein Verfahren zur Unterdrückung von durch externe Felder hevorgerufenen Störsignalen sowie eine Anordnung vorgeschlagen, wobei die Störsignale 8 sowohl im Innenleiter 3 als auch im Mantelleiter 4 des Kabels geführt werden und wobei die Störsignale 8 auf dem Mantelleiter detektiert und die detektierrten Störsignale 8 in ihrer Phase und/oder Amplitude an die Störsignale im Innenleiter 3 angepaßt werden und von dem Gesamtsignal 9 bestehend aus Nutzsignal 7 und Störsignal 8 abgezogen werden.

## Beschreibung

Die Erfindung geht aus von einem Verfahren sowie einer Anordnung zur Unterdrückung von Störsignalen in koaxialen Kabeln nach der Gattung der unabhängigen Ansprüche.

Telekommunikationssysteme, im speziellen auch hybride Faser/Koax Zugangsnetze , weisen einen Rückkanal vonden Teilnehmern zur Kopfstation des Systems auf. Dieser Rückkanal arbeitet beispielsweise in einem Frequenzbereich von 5 bis 30 MHz und kann durch Interferenzen und Störungen aufgrund externer Felder beeinträchtigt werden. Diese Interferenzen führen dazu, daß der Empfänger in der Kopfstation des Systems ein auf einem Rückkanal übertragenes Signal beispielsweise nicht mehr genügend auflösen kann. Die in das Kabel eindringenden Störsignale rühren von Kurzwellensendern, wie privaten Radiosendern oder auch Rundfunksendern her. Diese Störsignale werden in einem realen Verteilnetz an mehreren Stellen in das System eingekoppelt. Beispielsweise führen schlechte Abschirmungen von Koaxialkabeln zur Einkopplung von Störsignalen in das (innere) Kabel. Ist eine Abschirmung eines Koaxialkabels fehlerhaft, werden die Signale sowohl in den Innenleiter des Kabels als auch in den Mantelleiter eingekoppelt. Auch über die Teilnehmerendgeräte selbst, z.B. über die Set-Top-Boxen oder über die Fernsehempfänger werden externe Störsignale in das innere Kabel eingekoppelt. Die Nutzsignalübertragung erfolgt dabei im Feldbereich zwischen Innenleiter und Mantelleiter des Kabels. Zur vereinfachten Darstellung wird im folgenden immer von einer Nutzsignalleitung im Innenleiter gesprochen.

Eine Möglichkeit die Störsignale zu unterdrücken besteht in einer nahezu perfekten Schirmung sowohl der Teilnehmerendgeräte, als auch aller koaxialen Verbindungen. Allerdings ist der Aufwand sehr hoch und auch bei kleinen Schirmlecks tritt sofort eine starke Einkopplung von Störsignalen auf.

Aus der DE-OS 32 35 111 ist eine Fernspeiseweiche für ein Leitungsendgerät eines Nachrichtenübertragungssystems bekannt. Am Anschluß des Leitungsendgerätes können Störspannungen in das Kabel gelangen, die zu einem Störpotential zwischen dem gleichstrommäßig auf Schwebepotential befindlichen Außenleiter der Koaxialleitung und dem Kabelausleiter führen. Zur wirksamen Dämpfung der Störspannungen wird eine Eingangsordnung für das angeschlossene Leitungsendgerät vorgeschlagen, die voll in Leitungstechnik aufgebaut werden kann und im Anschluß an eine Leitungsdrossel ein mittels eines keramischen Rohrkörpers mit gestuften Wellenwiderstandsverlauf und eines durch diesen hindurchgeführten Koaxialleitung aufgebauten Leitungsfilters, eines Leitungsübertragers zur Auftrennung des Hoch- und des Tiefpaßweges und eines Tiefpaßfilters für den Tiefpaßweg aufgebaut ist. Diese Anordnung dient zur Unterdrückung von Störungen, die durch mangelnde Trennung des Signal- und des Versorgungsstromes auftreten. Die Schaltung ist allerdings nicht in der Lage, Störungen, die genau im Frequenzband des Nutzsignals liegen zu unterdrücken.

Das erfindungsgemäße Verfahren zur Unterdrückung von Störsignalen in Koaxialkabeln mit den kennzeichnenden Merkmalen des unabhängigen Anspruchs hat dem gegenüber den Vorteil, daß gerade auch Störsignale, deren Frequenz genau im Frequenzband des Nutzsignales liegt, unterdrückt werden. Die Unterdrückung erfolgt auf einfach Weise, indem die Störsignale im Mantelleiter des koaxialen Kabels detektiert und vom Gesamtsignal, bestehend aus Nutzsignal und Störsignal, subtrahiert werden.

Durch die in den Unteransprüchen aufgeführten Maßnahmen sind vorteilhafte Weiterbildungen und Verbesserungen des im unabhängigen Anspruch angegebenen Verfahrens möglich.

Vorteilhafterweise wird die Detektion und Subtraktion des Störsignals direkt vor der weiteren Verarbeitung des Nutzsignals vorgenommen. Dadurch wird der Empfänger des Nutzsignals von Störungen entlastet und kann empfindlicher detektieren . Es sind dadurch höhere Kanalkapazitäten durch komplexere Modulationsarten auch bei Anwesenheit von externen Störsignalen möglich. Kosteneinsparungen erwachsen auch durch die reduzierte Notwendigkeit zur Netzaufarbeitung bei Einführung von Rückkanalsignalisierung für bidirektionale Dienste. Weiterhin ist es von Vorteil, daß mit dem erfindungsgemäßen Verfahren eine adaptive Einheit die Subtraktion vornehmen kann, so daß die Unterdrückung der Störsignale sich adaptiv an das Vorhandensein, an die Häufigkeit, an die wechselnde Signalstärke der Störsignale anpaßt und die Störbefreiungswirkung vergrössert.

Die Anordnung zur Unterdrückung von Störsignalen in koaxialen Kabeln ist auf einfache Weise aufgebaut und wird mit einer Meßschaltung, mit einer Manteldrossel und einem Abgriff des Signals am Mantelleiter vor und nach der Manteldrossel ausgeführt, wobei die Subtraktion des Störsignals sowohl von einer passiven Einheit als auch von einer aktiven Einheit durchgeführt werden kann. Es ist von Vorteil, daß im Fall des Einsatzes einer passiven Einheit ein Übertrager oder ein Operationsverstärker zur Subtraktion der Störsignale ausreichend ist. Für eine optimale Anpassung der Subtraktion an die Einstrahlung unterschiedlicher Störsignale ist eine aktive Einheit von Vorteil, wie sie z.B. durch einen Prozessor realisiert werden kann. Um das Verfahren zu optimieren, wird das Störsignal in seiner Phase und seiner Amplitude an das Störsignal des Innenleiters angepaßt, so daß die Subtraktion der Signale eine gute Unterdrückung der Störsignale erlaubt.

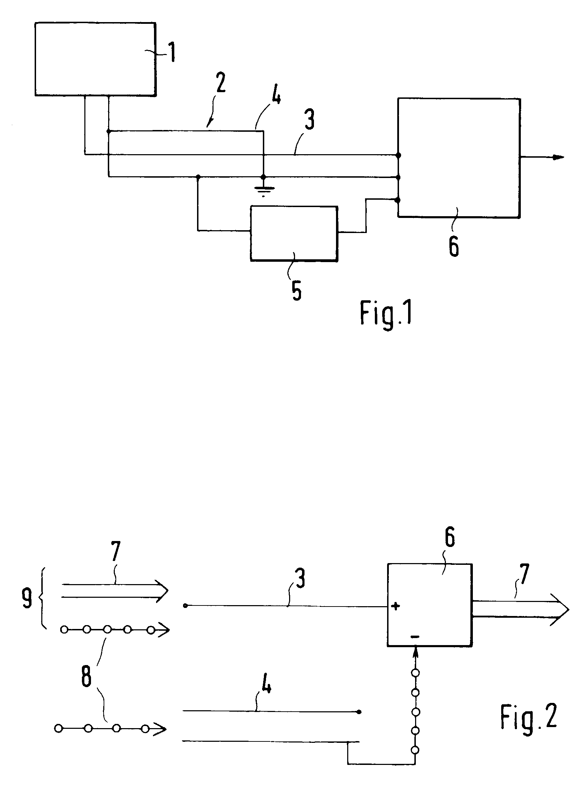

Ausführungsbeispiele der Erfindung sind in der Zeichnung dargestellt und in der nachfolgenden Beschreibung näher erläutert.
Es zeigt Figur 1 ein Telekommunikationssystem,
Figur 2 Signalverläufe in schematischer Darstellung und
Figur 3a - c mögliche Ausführungsformen der Störsignalunterdrückung.

Figur 1 zeigt den schematischen Aufbau eines Telekommunikationssystems, bei dem ein Teilnehmerendgerät 1 mit einer koaxialen Leitung 2 verbunden ist, die aus einem Innenleiter 3 und einem Mantelleiter 4 besteht. Am Außenleiter 4 greift eine Amplituden- und Phasenanpassung 5 an, die ausgangsseitig mit einer Subtraktionseinheit 6 verbunden ist. Die Subtraktionseinheit ist eingangsseitig mit dem Innenleiter 3 sowie einer Erdung verbunden. Die Vorgehensweise zur Durchführung des Verfahrens wird anhand von Figur 2 näher erläutert. Das in das Kabel eingekoppelte Störsignal 3 bewegt sich zusammen mit dem eigentlichen Nutzsignal 7 als Gesamtsignal 9 entlang des Innenleiters des koaxialen Kabels. Das Störsignal 8, das auf dem Außenleiter 4 des koaxialen Kabels läuft, ist zu dem Störsignal des Innenleiters sehr ähnlich. Die beiden Störsignale unterscheiden sich hauptsächlich in ihrer Amplitude, da die Ausbreitung auf dem Aussenleiter des Kabels nicht perfekt ist. Es können daher auch Phasenunterschiede als auch frequenzabhängige Amplitudenunterschiede in der Übertragung der Störsignale auftreten. Daher muß vor der Subtraktion des im Mantelleiter detektierten Störsignals eine Amplituden- und Phasenanpassung vorgenommen werden.

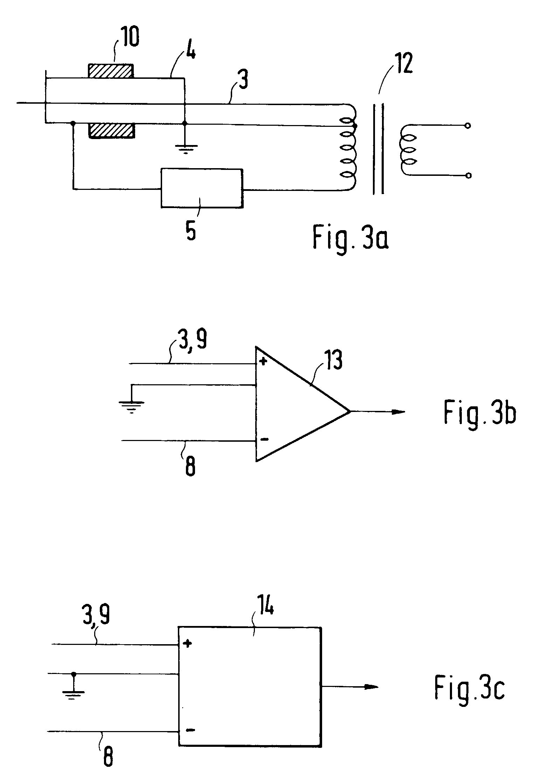

Figur 3a zeigt eine passive Ausführungsform der Anordnung zur Unterdrückung von Störsignalen. Das Koaxialkabel wird von einer Manteldrossel 10 umfaßt bzw. ist darauf aufgewickelt. In Signalrichtung gesehen vor und hinter der Manteldrossel wird das Signal des Mantelleiters abgegriffen. Das abgegriffene Signal durchläuft die Phasen- und Amplitudenanpassung 5 und wird mit dem Gesamtsignal des Innenleiters 3 auf einen Transformator 12 gegeben. Über den Transformator 12 erfolgt eine Subtraktion der Störsignale auf dem Innen- bzw. Außenleiter und das Nutzsignal kann auf der Ausgangsseite des Transformators abgegriffen werden.

Eine weitere Möglichkeit ist die Verwendung eines Operationsverstärkers 13, der eingangsseitig mit dem Innenleiter 3, mit einer Erdung und dem Abgriff des Störsignals 8 verbunden ist. Das Gesamtsignal 9 auf dem Innenleiter 3 liegt am nichtinvertierenden Eingang des Verstärkers an und das Störsignal 8, das bereits die Amplituden- und Phasenanpassung durchlaufen hat liegt am invertierenden Eingang des Verstärkers an.

Eine weitere Variante zur Realisierung der Anordnung zur Unterdrückung von Störsignalen ist in Figur 3c dargestellt. Die Signale auf dem Innenleiter 3, bestehend aus dem Gesamtsignal 9, sowie das detektierte Störsignal 8 liegen an einem Prozessor 14 an. Mit Hilfe eines solchen Prozessors kann sowohl die Phasen- und Amplitudenanpassung des Störsignals 8 vorgenommen werden, als auch die Subtraktion des Störsignals, das auf dem Mantelleiter detektiert wurde, vom Gesamtsignal vorgenommen werden. Eine solche aktive Einheit ermöglicht es auch eine Anpassung an geänderte Gegebenheiten des gesamten Übertragungssystems vorzunehmen. So ist eine einfachere Anpassung an geänderte Störfrequenzen, Störsignalfeldstärken und Einkoppel- bzw. Weiterleitungsmechanismen usw. auf einfache Weise möglich.

Die Verwendung der Anordnung zur Unterdrückung von Störsignalen in einem Kabelverteilnetz ist auf einfach Weise möglich. Die passive Anordnung ist ohne großen Schaltungsaufwand in jedem bestehenden Kabelnetz zu integrieren und kann auch in bestehenden Kabelnetzen eine gute Störsignalunterdrückung gewährleisten. Die Störsignalunterdrückung erfolgt zudem zentralisiert an der Kopfstation des Verteilsystems bzw am Übergang zur optischen Glasfaser des Zubringersystems, so daß für die zahlreichen Endkunden keine Veränderungen und Neuerungen notwendig werden. Der Einsatz einer aktiven Subtraktionseinheit in einem Verteilsystem bietet für die Zukunft die Möglichkeit auch bei breitbandigeren Rückkanälen gute Störsignalunterdrückung zu gewährleisten, und Störsender mit Hilfe von einfachen Messungen der Störsignale auf dem Mantel des Koaxialkabels zu unterdrücken.

## Patentansprüche

1. Verfahren zur Unterdrückung von durch externe Felder hervorgerufenen Störsignalen (8) in koaxialen Kabeln, wobei die Störsignale (8) sowohl im Innenleiter (3) als auch im Mantelleiter (4) des Kabels übertragen werden, dadurch gekennzeichnet, daß die Störsignale (8) auf dem Mantelleiter (4) detektiert werden und daß die detektierten Störsignale (8) in ihrer Phase und/oder Amplitude an die Störsignale im Innenleiter(3) angepaßt und von einem im Innenleiter geführten Gesamtsignal (9) bestehend aus Nutzsignal (7) und Störsignal (8) abgezogen werden.

2. Verfahren zur Unterdrückung von Störsignalen in koaxialen Kabeln nach Anspruch 1, dadurch gekennzeichnet, daß die Detektion (5) und die Subtraktion (6) des detektierten Störsignals (8) vor einer weiteren Verarbeitung des Nutzsignals (7) erfolgt.

3. Verfahren zur Unterdrückung von Störsignalen in koaxialen Kabeln nach Anspruch 1 oder 2, dadurch gekennzeichnet, daß die Verarbeitung des detektierten Störsignals (8) und des Nutzsignals (7) in einer adaptiven Einheit (14) erfolgt.

4. Anordnung zur Unterdrückung von Störsignalen in koaxialen Kabeln, wobei die Störsignale sowohl im Innenleiter(3) als auch als Mantelwellen am Mantelleiter (4) des Kabels übertragen werden und bei der ein Abgriff des Störsignals (8) vom Mantel mit Hilfe einer Manteldrossel (10) erfolgt und daß das über der Manteldrossel (10) am Mantel (4) gemessene Störsignal (8) einem Kompensator (6) zur Subtraktion zugeführt wird.

5. Anordnung zur Unterdrückung von Störsignalen nach Anspruch 4, dadurch gekennzeichnet, daß der Kompensator ein Übertrager (12) ist.

6. Anordnung zur Unterdrückung von Störsignale nach Anspruch 4, dadurch gekennzeichnet, daß der Kompensator ein Operationsverstärker (13) ist.

7. Anordnung zur Unterdrückung von Störsignalen in koaxialen Kabeln, wobei die Störsignale sowohl im Innenleiter (3) als auch als Mantelwellen im Mantelleiter (4) des Kabels übertragen werden und wobei ein Abgriff des Störsignals auf dem Mantel (4) mit einer Manteldrossel (10) erfolgt und daß das über der Manteldrossel (10) am Mantel gemessene Störsignal (8) einer aktiven Einheit (14) zur Subtraktion zugeführt wird.

8. Anwendung der Anordnung nach den Ansprüchen 4 bis 7 , dadurch gekennzeichnet, daß die Unterdrückung von Störsignalen im Rückkanal eines TV-Verteilnetzes eingesetzt ist.
